# EUROPEAN PATENT APPLICATION

(11) **EP 1 591 822 A1**
(43) Date of publication of application: **02.11.2005**
(21) Application number: 05009330.1
(22) Date of filing: 28.04.2005
(51) Int. Cl.: G02B 21/06, G02B 21/36, H04N 5/217

(54) **Imaging apparatus, illuminating light control method and illuminating light control programm**

(30) Priority: 28.04.2004 JP 2004132469
(71) Applicant: Olympus Corporation, Tokyo 151-0072 (JP)
(72) Inventor: Masuyama, Hideyuki, Machida-shi Tokyo 194-0215 (JP)
(74) Representative: von Hellfeld, Axel

(57) **Abstract**

An imaging apparatus (36) for capturing an observed image by a microscope apparatus includes: an imaging device (42) detecting observation light formed by an optical system (100) for image forming; a display unit (59) for displaying an image of a sample (3) based on observation light detected by the imaging device (42); and a control unit (90) for controlling a shading unit (23) corresponding to an operation mode. With the configuration, by performing control by appropriately opening and closing a shutter of the microscope apparatus depending on the operation mode of the imaging apparatus (36), an imaging apparatus (36) capable of realizing comfortable observation and protecting against damage to a sample (3) such as fading, etc. during observation, an illuminating light control method used by the imaging apparatus (36), and a illuminating light control program can be successfully provided.

## Description

### Background of the Invention

### Field of the Invention

The present invention relates to an imaging apparatus, an illuminating light control method, and an illuminating light control program, and more specifically to an imaging apparatus for capturing an observed image by a microscope apparatus including a light source for emitting illuminating light, an optical system for illumination for leading the illuminating light emitted by the light source to irradiate a sample, a shading unit for cutting off the light led to the sample, and an optical system for forming an image by collecting observation light output from the sample irradiated with the illuminating light, an illuminating light control method and an illuminating light control program used by the imaging apparatus.

### Description of the Related Art

Conventionally, in fluorescent observation or fluorescent shooting by a microscope apparatus, it is known to control by opening or closing a shutter of illuminating light according to a trigger signal output by an imaging apparatus to reduce damage by fading, etc. of a sample by illuminating light (for example, Japanese Published Patent Application No. Hei 7-199072).

The configuration of the conventional microscope apparatus is briefly explained below.

Illuminating light from a light source passes through an illuminating lens and enters a half mirror. Of the illuminating light entering the half mirror, the illuminating light reflected by the half mirror passes through an objective lens and irradiates a sample loaded on a stage. Assuming that an optical axis direction is a Z direction, and two directions orthogonal to each other on a plane orthogonal to the Z direction are X and Y directions, a stage can travel in the X, Y, and Z directions by a stage drive system.

Observation light reflected by a sample passes through an objective lens, and enters a half mirror. The observation light which passes through the half mirror also passes through a forming lens and forms an image on an image sensor. An output signal from an image sensor is converted to an image signal by a video signal processing circuit, and then transferred to a monitor. Thus, an image of a sample is displayed on the monitor.

A shutter used in the microscope apparatus receives a trigger signal so that the shutter can be opened in an exposure period when the imaging apparatus obtains an image, and can be closed in the other period, thereby preventing excess illuminating light from irradiating a sample (for example, Japanese Published Patent Application No. 2000-330033.

However, the method for operating an imaging apparatus has been diversified. For example, various methods for capturing an image by displaying motion images, obtaining still images, suppressing dark current noise of an imaging device caused by an exposure period and the temperature of a device, etc. have been used.

### Summary of the Invention

According to an aspect of the present invention, the imaging apparatus of the present invention is an imaging apparatus for capturing an observed image by a microscope apparatus including a light source for emitting illuminating light, an optical system for illumination for leading the illuminating light emitted by the light source to irradiate a sample, a shading unit for cutting off the light led to the sample, and an optical system for forming an image by collecting observation light output from the sample irradiated with the illuminating light, and includes: an imaging device for detecting observation light formed by the optical system for image forming; a display unit for displaying an image of the sample based on the observation light detected by the imaging device; and a control unit for controlling the shading unit corresponding to the operation mode displayed by the display unit.

### Brief Description of the Drawings

The present invention will be more apparent from the following detailed description when the accompanying drawings are referenced.
Fig. 1 shows the configuration of the microscope system;
Fig. 2 is a block diagram showing the configuration of the electronic camera used in the microscope system;
Fig. 3 is a flowchart showing the flow of a process performed by an illuminating light control program in displaying motion images;
Fig. 4 shows the data structure of an operation definition table;
Fig. 5 is a timing chart for explanation of the method of driving a CCD in displaying motion images;
Fig. 6 is a timing chart for explanation of the method of driving a CCD in fetching still images;
Fig. 7 is a flowchart showing the flow of the process performed by an illuminating light control program in intermittent shooting;
Fig. 8 is a timing chart for explanation of the method of driving a CCD in intermittent shooting;
Fig. 9 is an explanatory view of the dark-field noise suppressing process;
Fig. 10 is a flowchart of the flow of the process of executing the illuminating light control program in the dark-fieid noise suppressing process;
Fig. 11 is a timing chart for explanation of the method of driving a CCD in the dark-field noise suppressing process;
Fig. 12 shows the configuration of the microscope system as the first variation example; and
Fig. 13 is a block diagram showing the configuration of the electronic camera used in the microscope system as the second variation example.

### Description of the Preferred Embodiments

The embodiments of the present invention are described below by referring to the attached drawings.

That is, according to an aspect of the present invention, the imaging apparatus of the present invention is an imaging apparatus for capturing an observed image by a microscope apparatus including a light source for emitting illuminating light, an optical system for illumination for leading the illuminating light emitted by the light source to irradiate a sample, a shading unit for cutting off the light led to the sample, and an optical system for forming an image by collecting observation light output from the sample irradiated with the illuminating light, and includes: an imaging device for detecting observation light formed by the optical system for image forming; a display unit for displaying an image of the sample based on the observation light detected by the imaging device; and a control unit for controlling the shading unit corresponding to the operation mode displayed by the display unit.

It is desired that, in the imaging apparatus according to the present invention, the control unit controls the shading unit such that the sample can be constantly irradiated with illuminating light when the operation mode is the motion image display mode, and the sample can be irradiated with the illuminating light only in the exposure period when the operation mode is the still image display mode.

Furthermore, it is desired that the imaging apparatus according to the present invention further includes: a noise suppression unit for suppressing noise caused by a dark current of the imaging device, wherein the control unit controls the shading unit such that the sample can be irradiated with iiiuminating light only in the exposure period when the operation mode is a mode in which a bright-field image is obtained, and the sample in the exposure period can be cut off illuminating light when the operation mode is a mode in which a dark-field image is obtained.

It is also desired that, in the imaging apparatus according to the present invention, the light source is a reflected illumination source, and the shading unit is a shutter for reflected illumination for irradiating the sample with the illuminating light when the shutter is open, and cutting off the illuminating light when the shutter is closed.

It is also desired that, in the imaging apparatus according to the present invention, the light source is a transmitted illumination light source, and the shading unit is a transmission shutter for irradiating the sample with the illuminating light when the shutter is open, and cutting off the illuminating light when the shutter is closed.

According to an aspect of the present invention, the illuminating light control method of the present invention is an illuminating light control method used by the imaging apparatus for capturing an observed image by a microscope apparatus including a light source for emitting illuminating light, an optical system for illumination for leading the illuminating light emitted by the light source to irradiate a sample, a shading unit for cutting off the light led to the sample, and an optical system for forming an image by collecting observation light output from the sample irradiated with the illuminating light, and includes: detecting observation light formed by the optical system for image forming; and controlling the shading unit corresponding to the operation mode when displaying an image of the sample based on the detected observation light.

It is desired that, in the illuminating light control method according to the present invention, the shading unit is controlled to constantly irradiate the sample with illuminating light when the operation mode is the motion image display mode, and to irradiate the sample with the illuminating light only in the exposure period when the operation mode is the still image display mode.

Furthermore, it is desired that the illuminating light control method according to the present invention further inciudes: suppressing noise caused by a dark current of the imaging device, wherein controlling the shading unit such that the sample can be irradiated with illuminating light only in the exposure period when the operation mode is a mode in which a bright-field image is obtained, and the sample in the exposure period can be cut off illuminating light when the operation mode is a mode in which a dark-field image is obtained.

According to an aspect of the present invention, the illuminating light control program product of the present invention is an illuminating light control program product used by the imaging apparatus for capturing an observed image by a microscope apparatus including a light source for emitting illuminating light, an optical system for illumination for leading the illuminating light emitted by the light source to irradiate a sample, a shading unit for cutting off the light led to the sample, and an optical system for forming an image by collecting observation light output from the sample irradiated with the illuminating light, and includes: a procedure of detecting observation light formed by the optical system for image forming; and a procedure of controlling the shading unit corresponding to the operation mode when displaying an image of the sample based on the detected observation light.

It is desired that, in the illuminating light control program product according to the present invention, the control procedure controls the shading unit to constantly irradiate the sample with illuminating light when the operation mode is the motion image display mode, and to irradiate the sample with the illuminating light only in the exposure period when the operation mode is the still image display mode.

Furthermore, it is desired that the illuminating light control program product according to the present invention further includes: a procedure of suppressing noise caused by a dark current of the imaging device, a procedure of controlling the shading unit such that the sample can be irradiated with illuminating light only in the exposure period when the operation mode is a mode in which a bright-field image is obtained, and the sample in the exposure period can be cut off illuminating light when the operation mode is a mode in which a dark-field image is obtained.

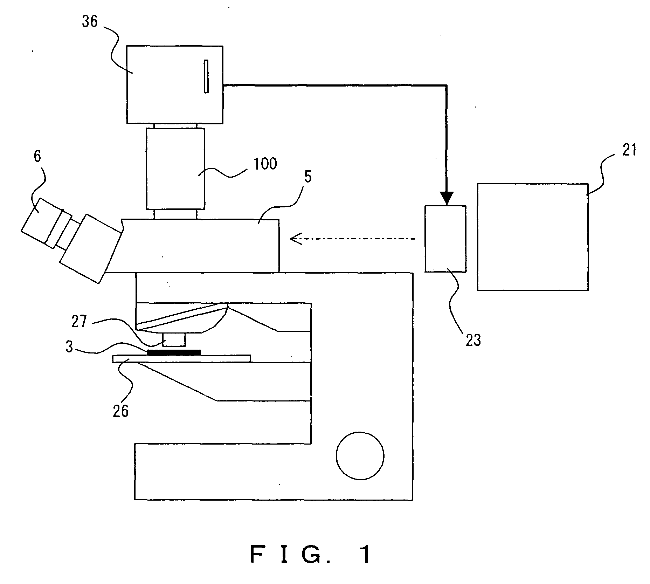

The first embodiment of the present invention is explained below by referring to Figs. 1 through 8.

Fig. 1 shows the configuration of the microscope system.

The microscope system has the configuration in which the microscope apparatus is connected to an electronic camera.

In Fig. 1, illuminating light emitted from a reflected illumination source 21 enters a 3-lens cylinder unit 5 through a shutter 23 for reflected illumination for cutting off the illuminating light lead by a sample 3, and irradiates the sample 3 on a stage 26 through an objective lens 27 which is an optical system for illumination for leading the illuminating lens emitted from the reflected illumination source 21 to the sample 3 for irradiation. The image of the sample 3 is lead to an eyepiece unit 6 through the objective lens 27 and the 3-lens cylinder unit 5, and is projected to an electronic camera 36 which is an imaging apparatus through a forming lens 100 for forming an image by collecting the observation light output from the sample 3 irradiated with the illuminating light.

The electronic camera 36 and the shutter 23 for reflected illumination are electrically connected.

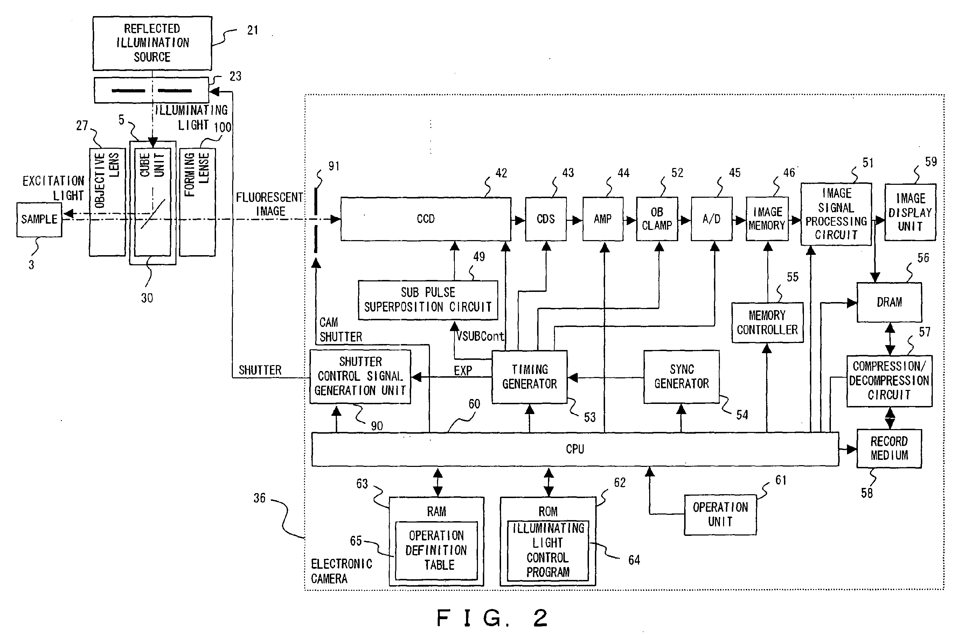

Fig. 2 is a block diagram showing the configuration of the electronic camera used in the microscope system.

The portion enclosed by alternate long and short dashed lines as shown in Fig. 2 shows the configuration of the electronic camera 36.

In Fig. 2, a charge coupled device (CCD) 42 captures a color or monochrome image, and is arranged on the observation optical path together with a photo eyepiece unit 35 of the microscope apparatus.

As explained above by referring to Fig. 1, the illuminating light from the reflected illumination source 21 enters the 3-lens cylinder unit 5 through the shutter 23 for reflected illumination, and is reflected by a cube unit 30, and irradiates the sample 3 on the stage 26 through the objective lens 27. The image of the sample 3 enters the 3-lens cylinder unit 5 through the objective lens 27 again, passes through the cube unit 30, and is led to the eyepiece unit 6 and projected to the electronic camera 36 through the 100.

In the electronic camera 36, the charge coupled device (hereinafter referred to simply as a CCD) 42 such as a CCD, etc. detects observation light formed by the forming lens 100, thereby capturing and opto-electrically converting the observed image of the sample 3 projected from the microscope apparatus. The CCD 42 is an interline type device capable of performing a reading operation during the integration of electric charge.

The electronic camera is configured by a CDS circuit (correlated double sampling) 43 for extracting an image signal component from the output signal of the CCD 42, an amplifier (hereinafter referred to as an AMP) 44 which is a gain control unit including an AGC (automatic gain control) circuit, etc. for adjusting the level of an output signal of the CDS circuit 43 to a predetermined gain value, an OB (optical black) clamp circuit 52 for determining a black level of an output signal from the AMP 44, an A/D converter 45 for changing an analog signal output from the OB clamp circuit 52 to a digital signal, a memory controller 55, to which an output signal is connected from the A/D converter 45, for controlling a write and a read to and from image memory 46, an image signal processing circuit 51 for processing an image by performing gray-scale correction, emphasis of a contour, etc. on an image signal read from the image memory 46, an image display unit 59 which is a display unit including a signal processing circuit for processing an image signal into a displayable format, DRAM (dynamic random access memory) 56 which is a storage unit having a built-in camera including memory for temporarily storing an image signal, a compression/decompression circuit 57 for performing a compressing process and a decompressing process on an image signal, a record medium 58 such as a memory card, etc. for storing an image signal, an operation unit 61 which is formed by a plurality of switches such as a trigger switch, etc. for generating a trigger signal for use in setting a shooting mode and starting an exposing operation, a timing generator (TG) 53 for generating a drive pulse depending on a desired exposing time and driving method of the CCD 42, a sync generator (hereinafter referred to as a SG) 54 for providing a synchronous signal for the TG 53 and the image signal processing circuit 51, etc.

A camera shutter 91 configured by a SUB pulse superposition circuit 49 for inputting a SUB pulse clamped to an inside voltage of the CCD 42, and a shutter control signal generation unit 90 for generating and outputting a control signal by opening/closing the shutter 23 for reflected illumination of a microscope apparatus corresponding to an instruction in various operation modes as a signal indicating an exposure period provided from the TG 53 is arranged in front of the CCD 42 to perform projection of an observed image and switch for shading for the CCD 42.

Each of these configuring components is electrically connected to a CPU (central processing unit) 60 which is a control unit, and the entire electronic camera 36 according to the present embodiment is integrally controlled by the CPU 60. The CCD 42 also has the function of an electronic shutter, thereby controlling an exposing time.

ROM (read only memory) 62 and RAM (random access memory) 63 are connected through a bus to the CPU 60, and the CPU 60 reads and executes various programs including an illuminating light control program 64 stored in the ROM 62. Especially, the illuminating light control program 64 is executed by the CPU 60 by referring to an operation definition table 65 stored in the RAM 63.

Described below is the operation of the imaging apparatus which is the electronic camera 36 with the above mentioned configuration. In the description, only the portions relating to the present invention in the operations performed during shooting are explained.

In the fluorescent observation spectrum method, the illuminating light emitted by the reflected illumination source 21 is dispersed by the fluorescent cube in the cube unit 30, and irradiates the sample 3 through the objective lens 27. On the sample 3, week fluorescent light is emitted by the irradiated light, the emitted light passes through the objective lens 27, and a wavelength component different from the spectrum is selectively transmitted by the fluorescent cube in the cube unit 30, and is projected to the CCD 42.

The image signal component of the observation light (image signal) detected by the CCD 42 is extracted in the CDS circuit 43, the output signal level is adjusted to a predetermined gain value in the AMP 44, the OB clamp circuit 52 regenerates a direct current to set the black level as a predetermined direct current voltage, and then the A/D converter 45 converts the obtained signal to a digital signal. The image signal converted to the digital signal is temporarily stored in the image memory 46 by the memory controller 55, output to the image signal processing circuit 51, processed in image processing such as gamma correction, edge emphasis, etc. by the image signal processing circuit 51, output to the image display unit 59, and the observed image of the sample 3 can be displayed.

Described above is the basic operation in displaying motion images.

Explained below is the operation in still image recording.

In still image recording, a still image record trigger is generated by an instruction to record a still image from the operation unit 61, and an image signal is temporarily stored in the image memory 46 as described above. Then, the image signal is read from the image memory 46 and treated by image processing, the image signal output from the image signal processing circuit 51 is temporarily stored in the DRAM 56, the compression/decompression circuit 57 performs a compressing process on the image signal according to the settings of the operation unit 61, and the result is stored in the record medium 58. Unless the compressing settings are performed by the operation unit 61, a still image can be recorded as uncompressed on the record medium 58.

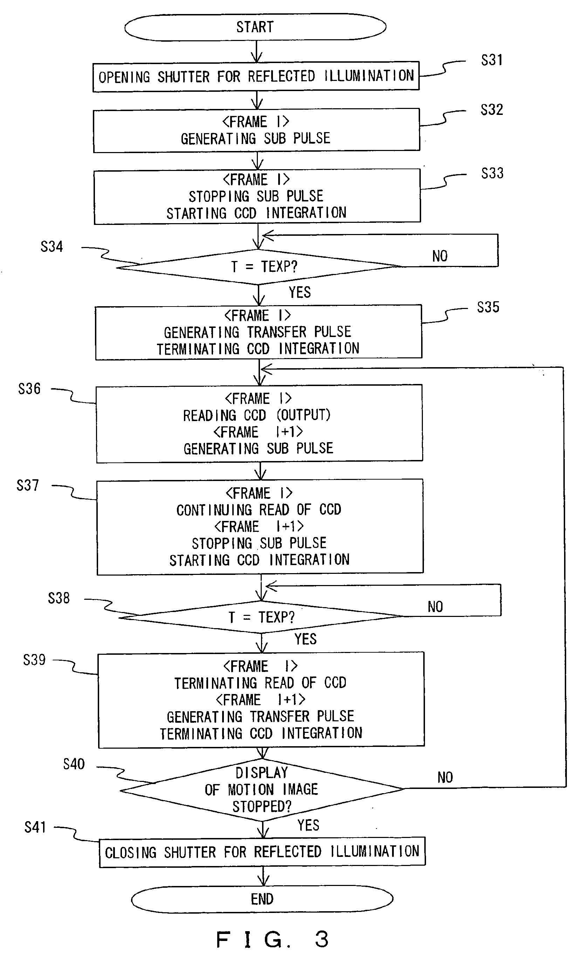

The operation in displaying motion images is explained by referring to Figs. 3 through 5. Before fetching a still image, motion images are displayed as a normal status.

Fig. 3 is a flowchart showing the flow of a process performed by an illuminating light control program in displaying motion images.

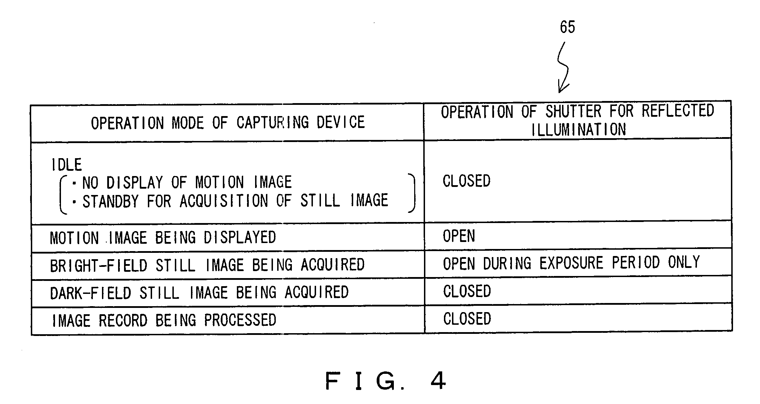

Fig. 4 shows the data structure of an operation definition table.

First, when the illuminating light control program 64 starts execution, the CPU 60 refers to the operation definition table 65 (Fig. 4).

Then, in step S31, to open corresponding to the "displaying an operation" of the operation mode the shutter 23 for reflected illumination closed in the state in which the operation status of the electronic camera (imaging apparatus) 36 is in an idle state, that is, when motion images are not displayed and the acquisition of a still image is awaited, the shutter 23 for reflected illumination is opened to irradiate the sample 3 with the illuminating light emitted from the reflected illumination source 21.

Then, in step S32, a SUB pulse (VSUB) is generated in the i-th (for example, the first) frame, the SUB pulse is stopped in step S33, and simultaneously the integration of charge in the CCD 42 is started by an exposure period signal EXP.

In step S34, the integration of charge in the CCD 42 is performed until an elapsed time T from the start of integration reaches a predetermined exposing time TEXP (until T = TEXP). When T = TEXP, a transfer pulse TG is generated in step S 35, thereby terminating the integration in the CCD 42.

Then, in step S36, in the (i + 1)th (for example, the second) frame period, the output of the i-th (for example, the first) frame accumulated in the CCD 42 in steps S33 through S35 is started, and the write to the memory and displaying an image are started, thereby generating the SUB pulse (VSUB) in the (i + 1) th frame. Then, in step S37, the SUB pulse of the (i + 1)th frame is stopped with the output of the i-th frame, a write to the memory and the display of an image continued.

In step S38, the integration of charge in the CCD 42 is continued until the elapsed time T from the start of the integration of the (i + 1)th frame reaches a predetermined exposing time TEXP (until T = TEXT). When T = TEXP, the output of the i-th frame, a write to the memory, and the display of an image are terminated, the transfer pulse TG is generated for the (i + 1)th frame, and the integration in the CCD 42 is terminated in step S39.

Then, in step S40, for example, it is determined whether or not display of motion images is to be stopped based on the presence/absence of an instruction to stop display of motion images.

If it is determined that the display is not to be stopped (NO), then i is incremented by 1 (i = i + 1), and the steps in and after S36 are repeated on the following frames. If it is determined that the display is to be stopped (YES), then the shutter 23 for reflected illumination is closed and the sample 3 is prevented from being irradiated with the illuminating light emitted from the reflected illumination source 21 in step S 41, thereby terminating the process.

By the above mentioned process of the illuminating light control program, the shutter 23 for reflected illumination is controlled to make the sample 3 be constantly irradiated with the illuminating light when the operation mode is a motion image display mode (displaying motion images as shown in Fig. 4).

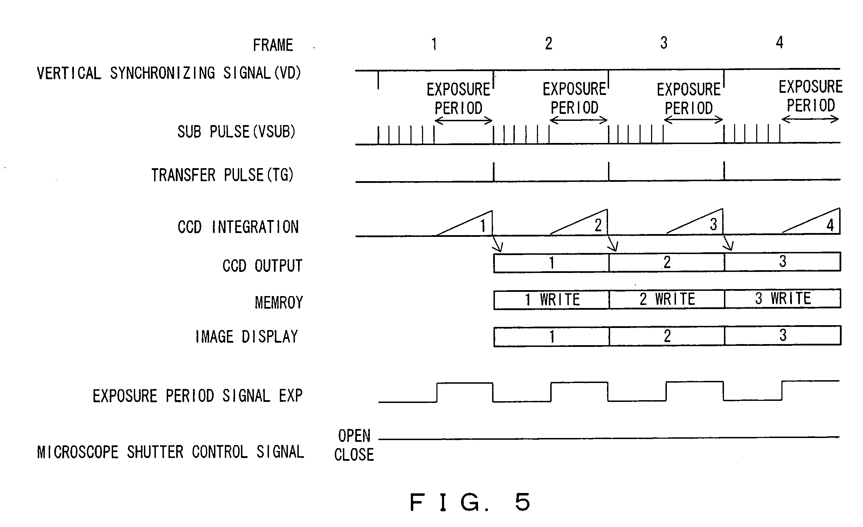

Fig. 5 is a timing chart for explanation of the method of driving a CCD in displaying motion images.

From top to bottom in Fig. 5, a frame number, a vertical synchronizing signal VD, a high voltage pulse VSUB to be applied to a substrate for forcible discharge of charge in a charge integration area, a transfer pulse TG from a charge integration area to a vertical transfer path, a charge integration status of a CCD, an output of a CCD, a memory operation status, an image display status, an exposure period signal EXP, and a microscope shutter control signal are shown in this order.

In one frame (between a vertical synchronizing signal VD and the next vertical synchronizing signal VD), in the period in which a SUB pulse (VSUB) is superposed, a charge is not accumulated to forcibly discharge the charge accumulated in the charge integration area to a semiconductor substrate. On the other hand, in the period in which a SUB pulse is not input to the CCD 42, a charge is accumulated (CCD integration 1 shown in Fig. 5) in the CCD 42. That is, the period in which a SUB pulse is not input is an exposure period. By changing the period in which a pulse is superposed on the VSUB, the exposure period can be changed.

The signal charge accumulated in the CCD 42 is read to the vertical transfer path not shown in the attached drawings in the CCD 42 by the charge transfer pulse TG. The signal charge transferred in the vertical transfer path in the next frame (in the period of the next vertical synchronizing signal VD) is transferred to the horizontal transfer path not shown in the attached drawings, and the horizontal transfer path is transferred in the read AMP 44, and sequentially output (CCD output 1 shown in Fig. 5) pixel by pixel finally by a read amplifier.

In the CCD 42, a signal charge is read while the next signal charge is accumulated in a predetermined exposure period in a charge integration area.

Thus, an exposing operation is performed in the CCD 42 for the integration of charge in each frame. That is, a signal indicating each frame exposure period is output from the charge transfer pulse TG.

In the shutter control signal generation unit 90, the CPU 60 sets the operation mode as "displaying an operation", and in the operation definition table 65 (Fig. 4), an operation is defined to set the shutter 23 for reflected illumination to be constantly open in the motion image display period.

Therefore, in the motion image display period, the shutter control signal generation unit 90 outputs a signal to open the shutter 23 for reflected illumination to the shutter 23 for reflected illumination. In Fig. 5, a Hi level of the output of the microscope shutter control signal is a signal level to open the shutter 23 for reflected illumination.

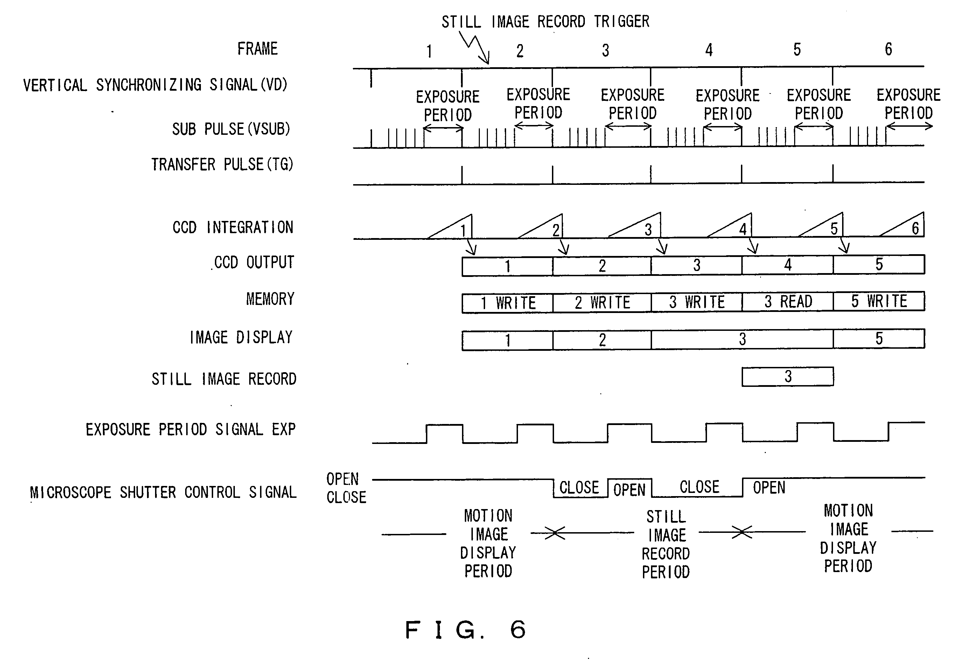

The operation in fetching a still image is explained below by referring to Fig. 6.

Fig. 6 is a timing chart for explanation of the method of driving a CCD in fetching still images.

From top to bottom in Fig. 6, a frame number, a vertical synchronizing signal VD, a high voltage pulse VSUB to be applied to a substrate for forcible discharge of charge in a charge integration area, a transfer pulse TG from a charge integration area to a vertical transfer path, a charge integration status of a CCD, an output of a CCD, a memory operation status, an image display status, a still image record status, an exposure period signal EXP, and a microscope shutter control signal are shown in this order.

The operation of fetching a still image is started by a still image record trigger (still image record trigger shown in Fig. 6).

Since the electronic camera 36 is performing a motion image displaying operation until a still image record trigger is provided, the shutter 23 for reflected illumination is kept open. When the still image record trigger is provided, the exposure is performed on a still image in the next vertical synchronizing signal VD period.

Observation light is accumulated as charge in a predetermined exposure period (CCD integration 3 shown in Fig. 6). Then, the charge accumulated by a charge transfer pulse TG is read to the vertical transfer path, output from the CCD 42 as in displaying motion images (CCD output 3 shown in Fig. 6), and temporarily stored in the image memory 46 (memory "3 write" shown in Fig. 6). The image signal if read from the image memory 46 in the vertical synchronizing signal VD period, treated in image processing, and recorded in the record medium 58.

I the still image recording operation, in the operation definition table 65, it is defined such that the shutter 23 for reflected illumination can be opened only in the exposure period of a still image. Therefore, the microscope shutter control signal in the still image recording operation is output as a signal to open the shutter 23 for reflected illumination only in the exposure period for a still image, and as a signal to close the shutter 23 for reflected illumination in the period in which accumulated charge is discharged by a SUB pulse and in the period in which charge accumulated for a still image is read.

In Fig. 6, the Hi level of the output of the microscope shutter control signal refers to a signal level to open the shutter 23 for reflected illumination, and the Lo level of the output of the microscope shutter control signal refers to a signal level to close the shutter 23 for reflected illumination.

In the above mentioned process, when the operation mode is the still image display mode, the shutter 23 for reflected illumination is controlled such that the sample 3 can be irradiated with illuminating light.

In the basic operation as explained in Figs. 3 through 6, the shutter 23 for reflected illumination is not opened or closed in each frame, and an operating tone of a shutter is not raised in the motion image display period. Therefore, a user can comfortably make an observation without having unnecessary sound, and the sample 3 can be irradiated with excitation light for a necessary period, thereby realizing both comfortable observation and protection against damage to the sample 3 such as fading of the sample 3.

Next, the operation in intermittent shooting in which a change with time of the sample 3 is recorded in the electronic camera 36 operating as described above is explained below.

The motion image display period continues until a still image record trigger is provided as described above.

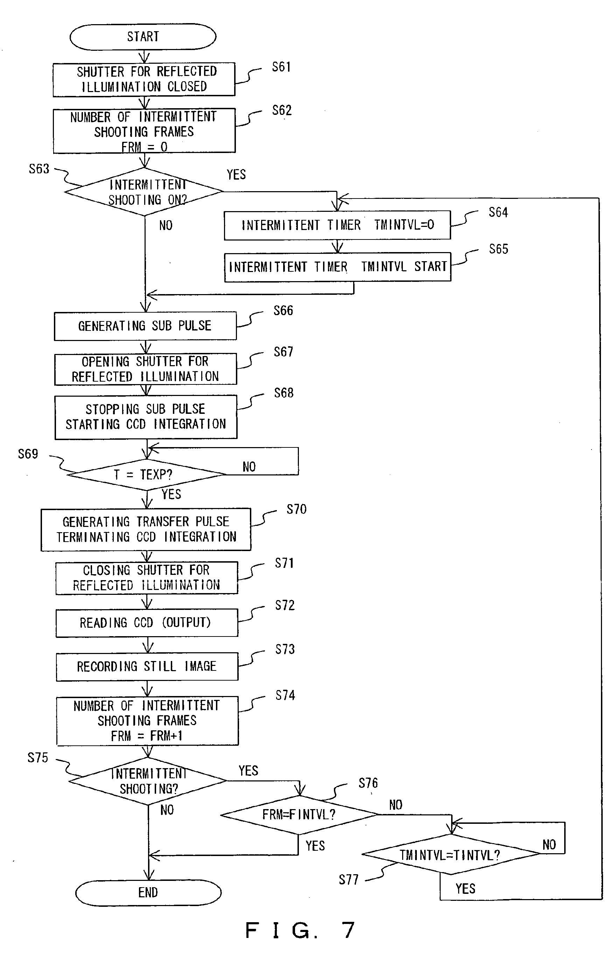

Fig. 7 is a flowchart showing the flow of the process performed by an illuminating light control program in intermittent shooting.

First, in step S61, the shutter 23 for reflected illumination is closed, and in step S62, 0 is substituted for the counter FRM for counting the number of intermittent shooting frames, thereby initializing the system.

In step S63, it is determined whether or not there is an instruction to perform intermittent shooting (ON). If it is determined that there is the instruction (YES), then 0 is substituted for a shooting interval timer (intermittent timer) TMINTVL for initialization in step S64. In step S65, the shooting interval timer (intermittent timer) TMINTVL starts counting.

Then, in step S66, a SUB pulse (VSUB) is generated. In step S67, the shutter 23 for reflected illumination. In step S68, the SUB pulse is stopped and simultaneously the integration of charge in the CCD 42 by the exposure period signal EXP is started.

Then, in step S69, the integration of charge in the CCD 42 is performed until the elapsed time T from the start of the integration reaches a predetermined exposing time TEXP (until T = TEXP). When T = TEXP, a charge transfer pulse TG is generated in step S70, and the integration in the CCD 42 is terminated.

In step S71, the shutter 23 for reflected illumination is closed. In step S72, the output of the charge accumulated in the CCD 42 in step S68 through S70 is started, and the write to memory and the display of an image are started. In step S73, a still image is recorded.

By recording a still image in step S73, the number of intermittent shooting frames FRM is incremented by 1 (FRM = FRM + 1). In step S75, it is determined again whether or not the intermittent shooting is turned ON.

If it is determined in step S75 that the intermittent shooting is turned ON (YES), it is determined in step S76 whether or not the number of intermittent shooting frames FRM has reached a predetermined number of set frames FINTVL (FRM = FINTVL). If it has reached (YES), the process terminates. If it has not reached (NO), the predetermined interval TINTVL of the shooting interval timer (intermittent timer) TMINTVL (TMINTVL = TINTVL) is awaited in step S77. If the shooting interval timer (intermittent timer) TMINTVL has reached the predetermined interval TINTVL (YES), then the processes in and after step S64 are repeated.

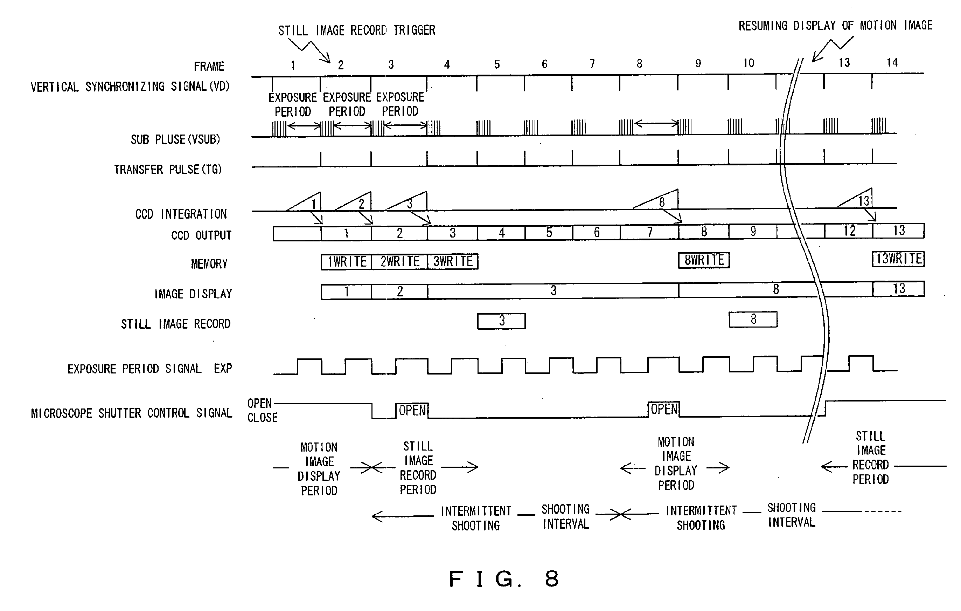

Fig. 8 is a timing chart for explanation of the method of driving a CCD in intermittent shooting.

From top to bottom in Fig. 8, a frame number, a vertical synchronizing signal VD, a high voltage pulse VSUB to be applied to a substrate for forcible discharge of charge in a charge integration area, a transfer pulse TG from a charge integration area to a vertical transfer path, a charge integration status of a CCD, an output of a CCD, a memory operation status, an image display status, a still image record status, an exposure period signal EXP, and a microscope shutter control signal are shown in this order.

The operation unit 61 sets in advance the number of shot frames and the shooting interval of the intermittent shooting, and the display of motion images is not performed during the standby for shooting.

When the operation unit 61 provides a still image record trigger, the charge is accumulated by the CCD 42 in a predetermined accumulating period as in the still image recording operation (CCD integration 3 shown in Fig. 8). At this time, the shutter control signal generation unit 90 outputs a Hi level signal only in the exposure period for still image recording.

Then, the accumulated charge is output from the CCD 42 in the vertical synchronizing signal VD period (CCD output 3 shown in Fig. 8), and is temporarily stored in the image memory 46. During the vertical synchronizing signal VD period, the shutter control signal generation unit 90 outputs a Lo level signal to close the shutter 23 for reflected illumination.

Furthermore, in the next vertical synchronizing signal VD, the image signal output from the image memory 46 is treated in image processing (image processing 3 shown in Fig. 8), and is recorded on the record medium 58 as in the still image recording operation.

Including the image processing period and the recording period in the record medium 58, the display of motion images is not performed in the standby period for shooting until the next shooting. Therefore, the shutter control signal generation unit 90 outputs the Lo level signal to close the shutter 23 for reflected illumination.

When a predetermined shooting interval passes, the exposure is performed for the next still image record, and the shutter control signal generation unit 90 outputs a Hi level signal to open the shutter 23 for reflected illumination in the exposure period.

At this time, the accumulated signal charge (CCD integration 8 shown in Fig. 8) is output from the CCD 42 in the next vertical synchronizing signal VD period (CCD output 8 shown in Fig. 8), temporarily stored in the image memory 46, and recorded on the record medium 58 in the next vertical synchronizing signal VD period.

The above mentioned operation is repeated for the number of shot frames set in advance, and the exposure for the display of motion images is started when the predetermined number of set frames is terminated (CCD integration 13 shown in Fig. 8).

Simultaneously, from the period, the shutter control signal generation unit 90 outputs a Hi level signal to constantly open the shutter 23 for reflected illumination.

As described above, if it is set such that the display of motion images cannot be performed in the standby period for shooting in the intermittent shooting, the shutter 23 for reflected illumination is closed during the period of non-display of motion images before or after the intermittent shooting operation, and the shutter 23 for reflected illumination is opened only in the exposure period for still image recording during the intermittent shooting operation. Therefore, the sample 3 is irradiated with illuminating light only in a necessary period in still image recording, and the damage of the sample 3 such as fading, etc. is suppressed, thereby performing comfortable observation without a noisy shutter operating tone during the preceding and subsequent display of motion images.

Described above is the operation performed when motion images are not performed in the intermittent shooting period. For example, if "automatic exposure is performed" is set during the standby period for shooting, the automatically exposure can be set for the next shooting during the standby period for shooting. In this case, the CPU 60 temporarily sets a motion image display status when images are obtained for automatically exposure. In the period, the shutter control signal generation unit 90 releases the shutter 23 for reflected illumination. After the automatically exposure setting is terminated, and the motion image display status is releases. Thus, the shutter control signal generation unit 90 closes the shutter 23 for reflected illumination.

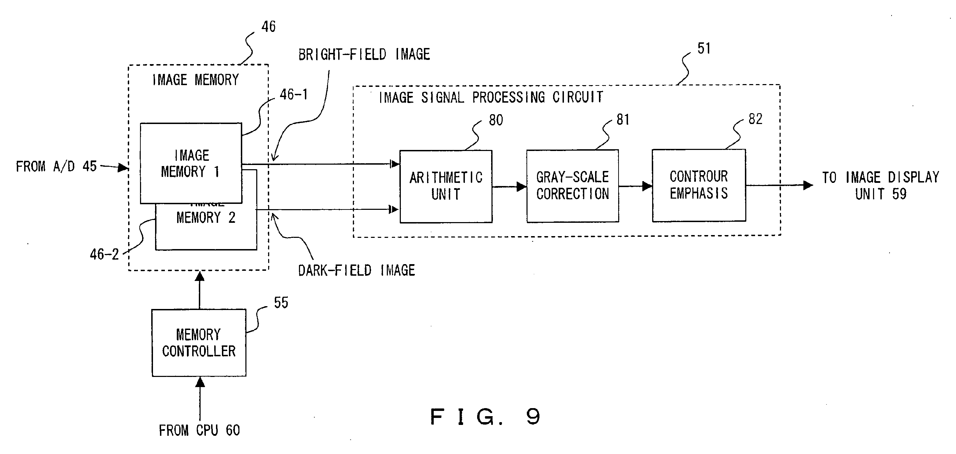

Next, by referring to Figs. 9 through 11, the second embodiment of the present invention is explained below.

The second embodiment of the present invention is an embodiment for the operation of suppressing the dark-field noise depending on the exposing time and the temperature of a normal CCD. Since the operation in the display of motion images is similar to the first embodiment of the present invention, the explanation is omitted here.

Fig. 9 is an explanatory view of the dark-field noise suppressing process.

In Fig. 9, the image memory 46 comprises image memory 1 (46-1) and image memory 2 (46-2), and the image signal processing circuit 51 comprises the arithmetic unit 80, the gray-scale correction 81, and the contour emphasis 82.

The image memory 1 (46-1) stores a bright-field image, the image memory 2 (46-2) stores a dark-field image. The arithmetic unit 80 subtracts the dark-field image stored in the image memory 2 (46-2) from the bright-field image stored in the image memory 1 (46-1), and suppresses the noise caused by the dark current of the CCD 42. The gray-scale correction 81 corrects the gray scale of the image data subtracted by the arithmetic unit 80, and the contour emphasis 82 further performs the process for emphasizing the contour.

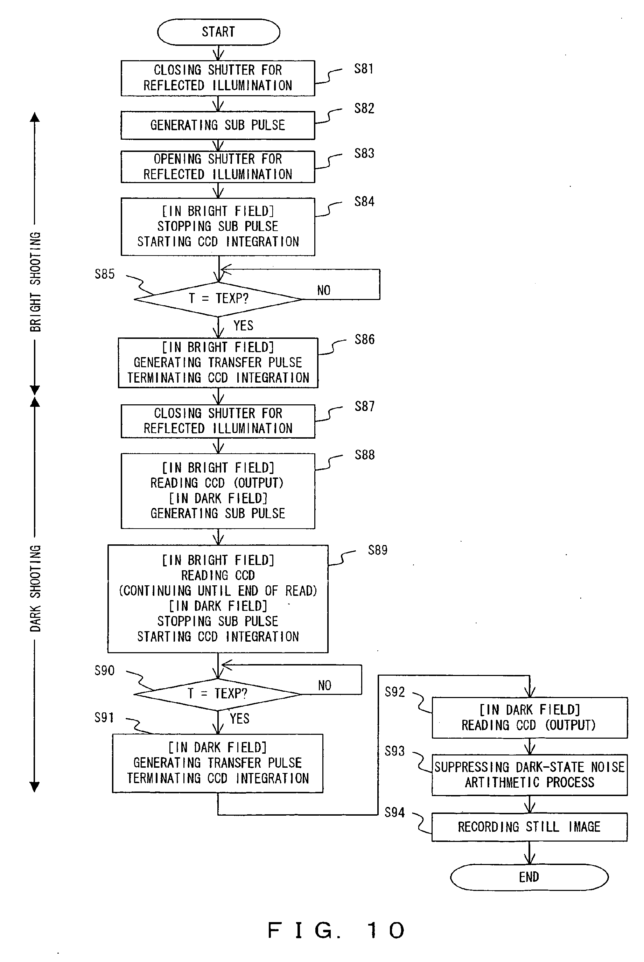

Fig. 10 is a flowchart showing the flow of the process performed by the illuminating light control program in the process of suppressing dark-field noise.

First, in step S81, the shutter 23 for reflected illumination is closed. In step S82, a SUB pulse (VSUB) is generated. In step S83, the shutter 23 for reflected illumination is opened.

In step S84, a SUB pulse is stopped, and simultaneously the integration of charge in the CCD 42 is started for the bright-field image according to the exposure period signal EXP.

In step S85, the integration of charge in the CCD 42 is performed for a bright-field image until the elapsed time T from the start of the integration reaches the predetermined exposing time TEXP (until T = TEXP). When T = TEXP, a charge transfer pulse TG is generated in step S 86, and the integration in the CCD 42 for the bright-field image is terminated.

Then, in step S 87, the shutter 23 for reflected illumination is closed. In step S88, for the bright-field image accumulated in the CCD 42 in steps S84 through S86, the output of charge and a write to the memory are started, and the SUB pulse (VSUB) about the bright-field image is generated.

Then, in step S 89, the output and write to the memory for the bright-field image are terminated, the SUB pulse is stopped, and simultaneously the integration of charge in the CCD 42 about a dark-field image is started according to the exposure period signal EXP.

Then, in step S90, the integration of charge in the CCD 42 for the dark-field image is performed until the elapsed time T from the start of the integration reach a predetermined exposing time TEXP (T = TEXP). When T = TEXP, a charge transfer pulse TG is generated in step S91, and the integration in the CCD 42 for the dark-field image is terminated.

Then, in step S92, the output of charge and a write to memory are performed for the dark-field image accumulated in the CCD 42 in steps S89 through S91.

Then, in step S93, a dark-field noise suppressing arithmetic process, that is, a process of subtracting a dark-field image from a bright-field image is performed, or a gray-scale correction process, a contour emphasizing process, etc. are performed, and a still image is recorded in step S94

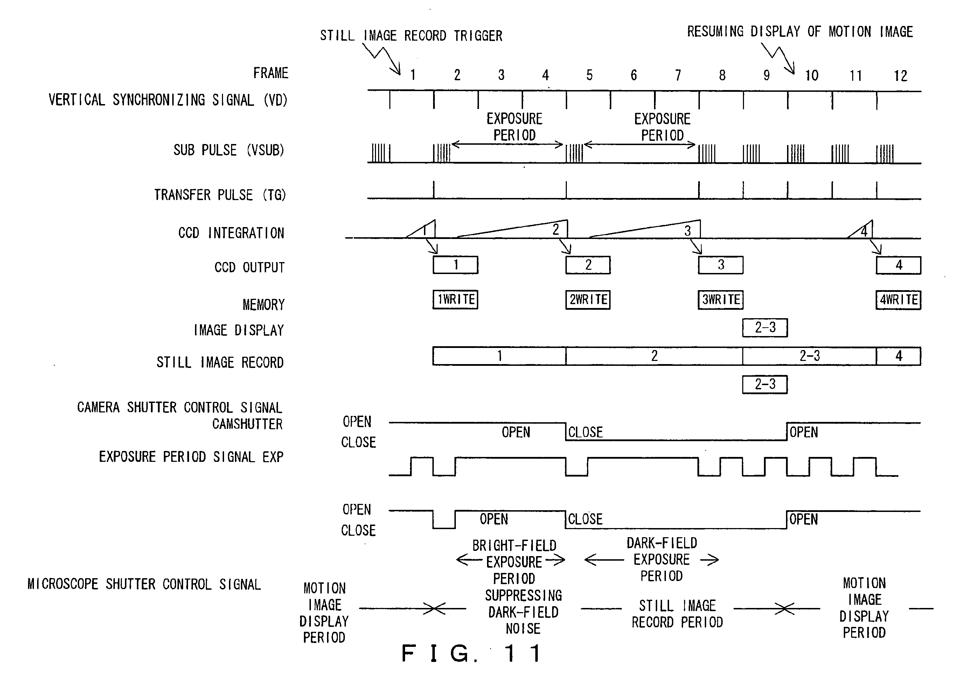

Fig. 11 is a timing chart for explanation of the method of driving a CCD in the suppressing process of dark-field noise.

From top to bottom in Fig. 11, a frame number, a vertical synchronizing signal VD, a high voltage pulse VSUB to be applied to a substrate for forcible discharge of charge in a charge integration area, a transfer pulse TG from a charge integration area to a vertical transfer path, a charge integration status of a CCD, an output of a CCD, a memory operation status, a dark-field noise suppressing process status, an image display status, a still image record status, a camera shutter control signal, an exposure period signal EXP, and a microscope shutter control signal are shown in this order. The timing chart in Fig. 11 shows the operation at a long-time exposure in recording a still image.

When a dark-field noise suppressing process is performed, an actual shot image (bright-field image) is exposed with the camera shutter 91 kept in an open status. Then, the camera shutter 91 is closed, and an image (dark-field image) with the CCD 42 cut off beams of light is exposed for the same period as the bright-field image.

Then, the dark-field noise suppressing process is performed by subtracting a dark-field image from a bright-field image.

When a dark-field noise suppressing process is set by the operation unit 61, and a still image record trigger is provided, the bright-field image for still image record can be started using the next vertical synchronizing signal VD.

When long-time exposure is performed, the period from the point when the SUB pulse (VSUB) stops to the point when a charge transfer pulse TG is input is referred to ad an exposure period. In Fig. 11, the two and more vertical synchronizing signal VD periods is set as an exposure period. In the period, charge is accumulated in the CCD 42 (CCD integration 2 in Fig. 11).

At this time the camera shutter 91 is in the open status, and the shutter 23 for reflected illumination is in the open status only in the exposure period of a bright-field image.

When a charge transfer pulse TG is input, the exposure period of a bright-field image terminates, and the CPU 60 closes the camera shutter 91 and the shutter control signal generation unit 90 outputs a Lo level signal to close the shutter 23 for reflected illumination.

In Fig. 11, the camera shutter 91 is in the open status at the hi level of the camera shutter control signal, and the camera shutter 91 is cut off beams of light at the Lo level of the camera shutter control signal.

When the charge transfer pulse TG is input, the accumulated charge is output from the CCD 42 at the next vertical synchronizing signal VD (CCD output 2 in Fig. 11). An output image from the CCD 42 is temporarily stored in the image memory 1 (46-1).

When the CCD 42 outputs a bright-field image, the CCD 42 starts exposing a dark-field image because the CCD 42 is cut off beams of light, and the integration of charge is continued until a charge transfer pulse TG is input (CCD integration 3 in Fig. 11).

At this tome, the CCD 42 only has to accumulate a shaded image. Therefore, the shutter control signal generation unit 90 outputs a Lo level signal to the shutter 23 for reflected illumination although in the exposure period of a dark-field image, thereby placing the shutter 23 for reflected illumination in the closed status.

When a charge transfer pulse TG is input to the CCD 42, the CCD 42 outputs accumulated charge at the next vertical synchronizing signal VD (CCD output 3 in Fig. 11). The output signal is temporarily stored in the image memory 2 (46-2).

When a bright-field image and a dark-field image are stored in the image memory 46, the dark-field noise suppressing process is performed in the next vertical synchronizing signal VD period. The memory controller 55 simultaneously reads image signals from the image memory 1 (46-1) and the image memory 2 (46-2), and subtracts a dark-field image from a bright-field image using the arithmetic unit 80 (dark-field noise suppressing process 2 - 3 (2 minus 3)).

The subtraction result from the arithmetic unit 80 is treated in a gray-scale correction process, a contour emphasis process, etc. which are other image processing operations by the image signal processing circuit 51, output to the image display unit 59, temporarily stored in the DRAM 56, and recorded as a still image in the record medium 58.

When still image recording is performed, the CPU 60 opens the camera shutter 91 to resume the display of motion images, and the shutter control signal generation unit 90 outputs a Hi level signal to the 41, and controls the shutter 23 for reflected illumination in the open status.

When dark-field noise suppressing process is performed with the open/closed status of the camera shutter 91 in the above mentioned operations, the shutter 23 for reflected illumination is constantly open in the motion image display period, the shutter 23 for reflected illumination is closed in the exposure period when a still image is recorded, and the shutter 23 for reflected illumination is opened only in the exposure period of a bright-field image. Therefore, the sample 3 is irradiated with illuminating light only in a necessary period in still image recording, and the damage of the sample 3 such as fading, etc. is suppressed, thereby performing comfortable observation without a noisy shutter operating tone during the preceding and subsequent display of motion images. That is, when the operation mode is a mode in which a bright-field image is obtained, the shutter 23 for reflected illumination is controlled such that the sample 3 can be irradiated with illuminating light only in the exposure period, and sample 3 can be cut off illuminating light in the exposure period in the mode in which the operation mode is a mode in which a dark-field image can be obtained.

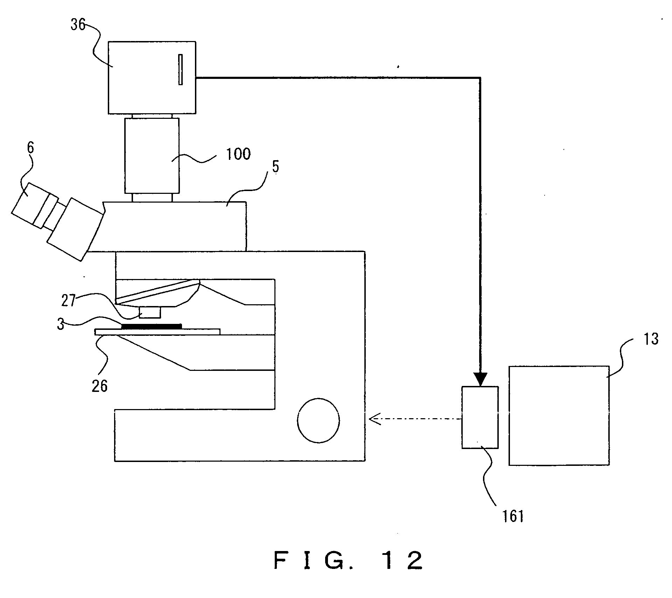

The first and second embodiments are explained above by referring to Figs. 1 through 11. The reflected illumination source 21 and the shutter 23 for reflected illumination can be replaced with the microscope system in the first variation example shown in Fig. 12 by combining the microscope apparatus using a transmitted illumination light source 13 and a transmission shutter 161 with the imaging apparatus (electronic camera 36) by a spectrum method of the microscope apparatus.

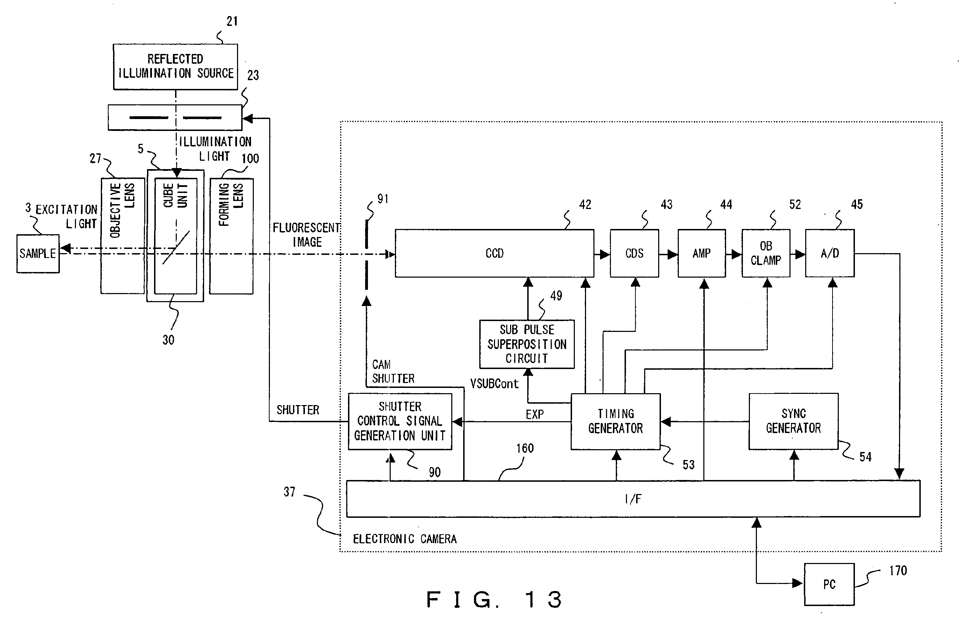

As an electronic camera 37 used in the microscope system according to the second variation example shown in Fig. 13, a part of the functions of the electronic camera 36, that is, the image memory 46, the image signal processing circuit 51, the memory controller 55, the DRAM 56, the compression/decompression circuit 57, the record medium 58, the image display unit 59, the CPU 60, the operation unit 61, the ROM 62, and the RAM 63 can be included in an external computer (PC) 170 through an external I/F 160.

Each embodiment and a variation example of the present invention are explained above by referring to the attached drawings, but the imaging apparatus to which the present invention is applied can be a simple unit, a system or an integrated device including a plurality of devices, or a system in which processes are performed through a network such as a LAN, a WAN, etc. without limiting the type of embodiment to any of the above mentioned embodiments so far as the function can be performed.

Furthermore, it can be realized by a system in which a CPU, memory such as ROM, RAM, etc., an input device, an output device, an external storage device, a medium drive device, a portable record medium, a network connection device are connected via a bus. That is, the present invention can be realized by providing memory such as ROM, RAM, etc., an external storage device, a portable record medium storing a program code of software realizing a system of each of the above mentioned embodiments for the imaging apparatus, and by reading and executing the program code by the computer of the imaging apparatus.

In this case, a program code itself read from a portable record medium, etc. realizes a new function of the present invention, and the portable record medium recording the program code configures the present invention. A portable record medium for providing a program code can be, for example, a flexible disk, a hard disk, an optical disk, a magneto-optical disk, CD-ROM, CD-R, DVD-ROM, DVD-RAM, magnetic tape, a non-volatile memory card, a ROM card, electronic mail, personal computer communications, and other network connection devices (that is, a communication circuits), etc.

Furthermore, by a computer executing a program code read to the memory, the functions of various embodiments can be realized, and all or a part of the actual processes using the OS operating on a computer based on an instruction of a program code, and the processes are realized by various embodiments described above.

Additionally, a program code read from a portable record medium and a program (data) provided by a program (data) provider are written to the memory in the feature expansion unit connected to a feature expansion board inserted into a computer and, at an instruction of the program code, the CPU provided in the feature expansion board and the feature expansion unit can perform all or a part of the actual processes, thereby realizing the function of each of the embodiments.

That is, the present invention is not limited to each of the embodiments, but can take any configuration or form within a gist of the present invention.

According to the present invention, in an imaging apparatus for capturing an observed image by a microscope apparatus having a light source for emitting illuminating light, an optical system for illumination for leading the illuminating light emitted by the light source to irradiate a sample, a shading unit for cutting off the light led to the sample, and an optical system for forming an image by collecting observation light output from the sample irradiated with the illuminating light, an illuminating light control method and the illuminating light control program used by the imaging apparatus, the shading unit of the microscope apparatus is appropriate opened and closed depending on the operation mode of the imaging apparatus, thereby realizing both comfortable observation and protection against damage to the sample 3 such as fading of the sample 3.

## Claims

1. An imaging apparatus (36) for capturing an observed image by a microscope having a light source (21) for emitting illuminating light, an optical system (27) to lead the illuminating light emitted by the light source (21) to a sample (3), shading means (23) for cutting off the light led to the sample (3), and an optical system (100) for forming an image by collecting observation light from the sample (3) irradiated with the illuminating light, comprising:
an imaging device (42) detecting observation light formed by the optical system (100) for image forming;
display means (59) for displaying an image of the sample (3) based on the observation light detected by the imaging device (42); and
control means (90) for controlling the shading means (23) corresponding to the operation mode.

2. The apparatus (36) according to claim 1, wherein
the control means (90) controls the shading means (23) such that the sample (3) can be constantly irradiated with illuminating light when the operation mode is the motion image display mode, and the sample (3) can be irradiated with the illuminating light only in the exposure period when the operation mode is the still image display mode.

3. The apparatus (36) according to claim 1, further comprising:
noise suppression means suppressing noise caused by a dark current of the imaging device (42), wherein
the control means (90) controls the shading means (23) such that the sample (3) can be irradiated with illuminating light only in the exposure period when the operation mode is a mode in which a bright-field image is obtained, and
the sample (3) in the exposure period can be cut off illuminating light when the operation mode is a mode in which a dark-field image is obtained.

4. The apparatus (36) according to claim 1, wherein
the light source (21) having a reflected illumination source, and
the shading means (23) having a shutter for reflected illumination for the illuminating for the sample (3) light when the shutter is open, and cutting off the illuminating light when the shutter is closed.

5. The apparatus (36) according to claim 1, wherein
the light source (21) is a transmitted illumination source, and
the shading means (23) is a transmission shutter for irradiating the sample (3) with the illuminating light when the shutter is open, and cutting off the illuminating light when the shutter is closed.

6. An illuminating light control method used by an imaging apparatus (36) for capturing an observed image by a microscope apparatus having a light source (21) for emitting illuminating light, an optical system (27) for illumination for leading the illuminating light emitted by the light source (21) to irradiate a sample (3), shading means (23) for cutting off the light led to the sample (3), and an optical system (100) for forming an image by collecting observation light output from the sample (3) irradiated with the illuminating light, comprising:
an imaging device (42) detecting observation light formed by the optical system (100) for image forming; and
controlling the shading means (23) corresponding to the operation mode when displaying an image of the sample (3) based on the detected observation light.

7. The method according to claim 6, wherein
the shading means (23) is controlled to constantly irradiate the sample (3) with illuminating light when the operation mode is the motion image display mode, and to irradiate the sample (3) with the illuminating light only in the exposure period when the operation mode is the still image display mode.

8. The method according to claim 6, further comprising:
suppressing noise caused by a dark current of the imaging device (42), wherein
controlling the shading means (23) such that the sample (3) can be irradiated with illuminating light only in the exposure period when the operation mode is a mode in which a bright-field image is obtained, and the sample (3) in the exposure period can be cut off illuminating light when the operation mode is a mode in which a dark-field image is obtained.

9. An illuminating light control program product used by an imaging apparatus (36) for capturing an observed image by a microscope apparatus having a light source (21) for emitting illuminating light, an optical system (27) for illumination for leading the illuminating light emitted by the light source (21) to irradiate a sample (3), shading means for cutting off the light led to the sample (3), and an optical system (100) for forming an image by collecting observation light output from the sample (3) irradiated with the illuminating light, comprising:
a procedure of detecting observation light formed by the optical system (100) for image forming; and
a procedure of controlling the shading means (23) corresponding to the operation mode when displaying an image of the sample (3) based on the detected observation light.

10. The program product according to claim 9, wherein
the control procedure controls the shading means (23) to constantly irradiate the sample (3) with illuminating light when the operation mode is the motion image display mode, and to irradiate the sample (3) with the illuminating light only in the exposure period when the operation mode is the still image display mode.

11. The program product according to claim 9, further comprising:
a procedure of suppressing noise caused by a dark current of the imaging device (42), wherein
a procedure of controlling the shading means (23) such that the sample (3) can be irradiated with illuminating light only in the exposure period when the operation mode is a mode in which a bright-field image is obtained, and the sample (3) in the exposure period can be cut off illuminating light when the operation mode is a mode in which a dark-field image is obtained.

12. A transmission medium carrying an illuminating light control program product used by an imaging apparatus (36) for capturing an observed image by a microscope having a light source (21) for emitting illuminating light, an optical system (27) for illumination for leading the illuminating light emitted by the light source (21) to irradiate a sample (3), shading means (23) for cutting off the light led to the sample (3), and an optical system (100) for forming an image by collecting observation light output from the sample (3) irradiated with the illuminating light, comprising:
a procedure of detecting observation light formed by the optical system (100) for image forming; and
a procedure of controlling the shading means (23) corresponding to the operation mode when displaying an image of the sample (3) based on the detected observation light.
